# EUROPÄISCHE PATENTSCHRIFT

(11) **EP 1 935 923 B1**
(45) Veröffentlichungstag und Bekanntmachung des Hinweises auf die Patenterteilung: **22.08.2012**
(21) Anmeldenummer: 07120309.5
(22) Anmeldetag: 09.11.2007
(51) Int. Cl.: C08G 77/46, C08L 83/12

(54) **Verfahren zur Herstellung von SiOC-verknüpften, linearen Polydimethylsiloxan-Polyoxyalkylen-Blockcopolymeren und ihre Verwendung**
Method for manufacturing SiOC-linked linear polydimethylsiloxane-polyoxyalkylene-block copolymers and their application
Procédé de fabrication de copolymères à blocs de polyoxyalkyles polydiméthylsiloxane linéaires à liaisons SiOC et leur utilisation

(30) Priorität: 22.12.2006 DE 102006061351
(43) Veröffentlichungstag der Anmeldung: 25.06.2008
(73) Patentinhaber: Evonik Goldschmidt GmbH, 45127 Essen (DE)
(72) Erfinder: Knott, Wilfried, 45355, Essen (DE); Klein, Klaus-Dieter, 45481, Muelheim (DE); Landers, Rüdiger, 45257, Essen (DE); Windbiel, Dagmar, 45289, Essen (DE)

(56) Entgegenhaltungen:
- US-A- 3 836 560

## Beschreibung

Die Erfindung betrifft ein Verfahren zur Herstellung von SiOC-verknüpften, linearen Polydimethylsiloxan-Polyoxyalkylen-Blockcopolymeren mit sich wiederholenden (AB)-Einheiten die an ihren Termini im Durchschnitt > 1 Siloxangruppen enthalten.

Bei der Herstellung von Polyurethanweichschäumen werden dem Gemisch der Rohstoffe Polysiloxan-Polyoxyalkylen-Blockmischpolymerisate zugesetzt, welche vielfältige Aufgaben haben und u. a. die Ausbildung eines gleichmäßigen Porengefüges ermöglichen und den gebildeten Schaum bis zur Beendigung der Reaktion stabilisieren. Jedoch sind nicht alle Polysiloxan-Polyoxyalkylen-Blockmischpolymerisate in gleicher Weise geeignet. Um als Polyurethan-Schaumstabilisatoren brauchbar zu sein, müssen die Polyoxyalkylenblöcke und der Polysiloxanblock der Blockmischpolymerisate in einem ausgewogenen Verhältnis vorliegen, wobei auch der Aufbau der beiden Blöcke von großer Bedeutung ist. Es gibt dabei für den Aufbau eines möglichst wirksamen Schaumstabilisators eine Vielzahl von Variablen sowohl für den Polyoxyalkylenblock wie für den Polysiloxanblock:

Der Polyoxyalkylenblock kann aus verschiedenen Oxyalkyleneinheiten, vornehmlich aus Oxyethylen-, Oxypropylen- und Oxybutyleneinheiten zusammengesetzt sein. Dabei können das Gewichtsverhältnis dieser Einheiten zueinander, ihre Sequenz sowie das Molgewicht des Polyoxyalkylenblockes variiert werden. Von Bedeutung ist auch die Endgruppe des Polyoxyalkylenblockes, die in bezug auf die Polyurethanbildung reaktiv (z. B. OH-Gruppe) oder inert (z. B. Alkoxy-Gruppe) sein kann. Der Polyoxyalkylenblock kann mit dem Polysiloxanblock durch eine hydrolytisch stabile C-Si-Bindung oder die hydrolytisch weniger stabile C-O-Si -Bindung verknüpft sein. Dabei können auch unterschiedliche Polyoxyalkylenblöcke an den Polysiloxanblock gebunden sein.

Der Polysiloxanblock kann in bezug auf Art und Anteil der Si-Einheiten variiert werden. Der Siloxanblock kann geradkettig oder verzweigt sein und unterschiedliches Molekulargewicht aufweisen. Die Polyoxyalkylenblöcke können end- und/oder seitenständig an den Polysiloxanblock gebunden sein.

Vorhersagen über Wirksamkeit eines Polysiloxan-Polyoxyalkylen-Blockmischpolymerisates als Schaumstabilisator können nur in gewissem Maße gegeben werden. Der Fachmann ist deshalb genötigt, die Variationsmöglichkeit weitgehend empirisch zu erproben. In Anbetracht der großen, nahezu unübersehbaren Anzahl der Variationsmöglichkeiten stellt die Auffindung im Sinne der Polyurethanherstellung besonders wirksamer spezieller Strukturparameter und entsprechender Blockmischpolymerisate eine fortschrittsraffende und somit erfinderische Leistung dar.

Polysiloxan-Polyoxyalkylen-Blockmischpolymerisate, welche im durchschnittlichen Molekül unterschiedliche Polyoxyalkylenreste aufweisen, sind bereits wiederholt beschrieben worden. Aus der großen Anzahl entsprechender Veröffentlichungen sollen stellvertretend die folgenden Schriften genannt werden:

In der DE 10 2005 039 931.2 wird ein Verfahren zur Herstellung von SiOC-verknüpften, linearen Polydimethylsiloxan-Polyoxyalkylen-Blockcopolymeren mit sich wiederholenden (AB)-Einheiten beschrieben. Gemäß diesem Verfahren werden einer aus Aminosiloxan, Polyoxyalkylendiol und Solvens bestehenden Reaktionsmatrix bei erhöhten Temperaturen eine geringe Menge eines tertiären Amins wie z.B. aus der Reihe der aromatischen Amine (Pyridine, Pyrimidine, Pyridazin, Pyrazin, Chinolin, Imidazol, etc.) und/oder auch aus der Reihe der cycloaliphatischen Aminbasen (Chinuclidin, Diazabicyclo[2,2,2]octan, etc.) und hierbei insbesondere 1,8-Diazabicyclo[5,4,0]-undec-7-en hinzugesetzt und die Polykondensationsreaktion unter Freisetzung von Ammoniak bis zum angestrebten Molekulargewichtsaufbau gemäß der allgemeinen Reaktion ≡SiNH₂ + HOC≡ → ≡SiOC≡ + NH₃ durchgeführt.

Diese Verbindungen, ihre Verwendung zur Herstellung von Polyurethanschäumen sowie ein Verfahren zu ihrer Herstellung wird bereits in der US-3 836 560 beschrieben. Der Inhalt dieser Literaturstellen wird hiermit als Referenz eingeführt.

Diese Polyethersiloxane sind wertvolle grenzflächenaktive Additive zur Herstellung von Polyurethan-Schaumstoffen, wobei insbesondere ihre zellöffnende Wirkung in Etherschäumen oder offenzelligen Hartschäumen gefragt ist. Nachteilig erweist sich deren industrielle Synthese dardurch, dass sowohl die mit Salzanfall befrachtete Herstellung der Aminkomponente als auch das Kopplungserfahren selbst aufwändig sind und z. T. mit problematischen, in der betrieblichen Praxis nicht einfach zu handhabbaren Verbindungen gearbeitet werden muß.

Eine Aufgabe der vorliegenden Erfindung war es daher, ein einfaches, ökonomisch sinnvolles Verfahren zu entwickeln, mit dem (AB)-Blockcopolymere mit verbesserten Eigenschaften herstellbar sind.

Überraschenderweise wurde nun gefunden, dass sich, abweichend von dem offenbarten Stand der Technik, ein Zugang zu neuen hochmolekularen linearen SiOC-verknüpften Polydimethylsiloxan-Polyoxyalkylen-Blockcopolymeren erschließt, wenn man Polyetherdiole mit einem stöchiometrischen Überschuss α,ω-Dihydrogen-polydimethylsiloxanen in Gegenwart mindestens eines tertiären Amins als Katalysator und geringen Mengen Wasser zur Umsetzung bringt.

Für den Fachmann unvorhersehbar werden auf diese Weise Strukturen erhalten, die als Stabilisatoren bei der Herstellung von Polyurethanschäumen (PU-Schäume), insbesondere PU-Weichschäumen, sprunghaft bessere Eigenschaften aufweisen.

Ein Gegenstand der Erfindung ist daher ein Verfahren zur Herstellung von SiOC-verknüpften, linearen Polydimethylsiloxan-Polyoxyalkylen-Blockcopolymeren mit sich wiederholenden (AB)-Einheiten durch Umsetzung nach an sich bekannten Verfahren von Polyetherdiolen mit einem stöchiometrischen Überschuss (α,ω) Dihydrogen-polydimethylsiloxanen und einer oder mehrerer tertiären Amine als Katalysator, welches dadurch gekennzeichnet ist, dass die Reaktion nach vollständig erfolgter Umsetzung der Alkoholkomponente in Gegenwart geringer Mengen Wasser so lange weitergeführt wird, bis keine ≡Si(H)-Gruppen gasvolumetrisch mehr nachweisbar sind.

Ein weiterer Gegenstand der Erfindung ist dadurch gekennzeichnet, dass als tertiäres Amin mindestens eine Verbindung ausgesucht aus der Reihe der aromatischen Amine (Pyridine, Pyrimidine, Pyridazin, Pyrazin, Chinolin, Imidazol, etc.) und/oder aus der Reihe der cycloaliphatischen Aminbasen (Chinuclidin, Diazabicyclo[2,2,2]octan, etc.) und hierbei insbesondere 1,8-Diazabicyclo[5,4,0]-undec-7-en und/oder Pyrimidin verwendet wird.

Ein weiterer Gegenstand der Erfindung sind SiOC-verknüpfte, lineare Polydimethylsiloxan-Polyoxyalkylen-Blockcopolymere hergestellt gemäß diesem Verfahren.

Ein weiterer Gegenstand der Erfindung ist die Verwendung der gemäß dem erfindungsgemäßen Verfahren hergestellten Verbindungen als grenzflächenaktive Additive zur Herstellung von Polyurethan-Etherschäumen

Weitere Gegenstände der Erfindung sind durch die Ansprüche gekennzeichnet.

Die Siloxanblöcke A der Mischpolymeren repräsentieren in der Hauptsache lineare Siloxanpolymere oder Ketten mit sich wiederholenden Siloxaneinheiten, die durch die Summenformel (-R2SiO-)b dargestellt werden können.

Der Polyoxyalkylenblock (B) des linearen Blockmischpolymeren ist ein Oxyalkylenpolymer enthaltend die sich wiederholenden Oxyalkyleneinheiten (-CₙH₍₂ₙ₋ₘ₎R¹ₘO-)_{c}.

Das mittlere Molekulargewicht jedes Siloxanblocks (A) liegt zwischen ca. 650 bis 6500 g/mol, vorzugsweise 800 bis 1500 g/mol besonders bevorzugt bei ca. 1000 bis 1200 g/mol.

Das mittlere Molekulargewicht jedes Polyoxyalkylenblocks der erfindungsgemäß hergestellten Mischpolymeren liegt zwischen etwa 600 und 10.000 g/mol, vorzugsweise 1.000 bis 5.000 g/mol.

Die Größe der einzelnen Oxyalkyleneinheiten oder Siloxanblöcke ist nicht notwendigerweise einheitlich, sondern kann innerhalb der angegebenen Grenzen beliebig variieren.

Die einzelnen Polyoxyalkyleneinheiten sind Additionsprodukte aus mindestens einem Oxyalkylenmonomer, ausgesucht aus der Gruppe Ethylenoxid, Propylenoxid und Butylenoxid, vorzugsweise Mischprodukte aus mindestens zwei Monomereinheiten, insbesondere aus Ethylenoxid und Propylenoxid.

Die Polyoxyalkylenblöcke bestehen im Wesentlichen aus Oxyethyleneinheiten oder Oxypropyleneinheiten, bevorzugt sind gemischte Oxyethylen- und Oxypropyleneinheiten mit einem Oxyethylenanteil von etwa 30 bis 70 Gew.-% und 70 bis 30 Gew.-% Oxypropylenanteil, bezogen auf den Gesamtgehalt an Oxyalkyleneinheiten im Block.

Der gesamte Siloxanblockanteil beträgt im Copolymer zwischen 20 und 50 Gew.-%, vorzugsweise 25 bis 40 Gew.-%, und der Anteil der Polyoxyalkylenblöcke zwischen 80 und 50 Gew.-% und das Blockcopolymer weist ein mittleres zahlengemitteltes Molekulargewicht Mn von mindestens 20.000 g/mol bis ca. 160.000 g/mol, vorzugsweise 25.000 g/mol bis ca. 100.000 g/mol, insbesondere 30.000 g/mol bis ca. 60.000 g/mol und insbesondere bevorzugt 35.000 g/mol bis ca. 50.000 g/mol auf. Die Ermittlung der mittleren Molmassen basiert dabei auf den bekannten Methoden der GPC-Analytik.

Wirksame Katalysatoren im Sinne der vorliegenden Erfindung sind ein oder mehrere tertiäre Amine, ausgesucht aus der Gruppe der Reihe der aromatischen Amine (Pyridine, Pyrimidine, Pyridazin, Pyrazin, Chinolin, Imidazol, etc.) und/oder auch aus der Reihe der cycloaliphatischen Aminbasen (Chinuclidin, Diazabicyclo[2,2,2]octan, etc.) und hierbei insbesondere 1,8-Diazabicyclo[5,4,0]-undec-7-en. Eine erfindungsgemäß bevorzugte Katalysatorkombination besteht aus 1,8-Diazabicyclo[5,4,0]-undec-7-en (DBU) und Pyrimidin. Der Einsatz kann dabei von Beginn an als Kombination erfolgen oder man führt beispielsweise die Reaktion mit DBU bis zum vollständigen Umsatz der OH-Gruppen durch und führt die Reaktion dann mit Wasser und dem Pyrimidin bis zum vollständigen Umsatz der SiH-Gruppen weiter.

Die Katalysatoren/Katalysatorkombinationen werden üblicherweise in Mengen von ca. 0,01 bis ca. 3,0, vorzugsweise 0,10 bis 2,30 Gew.-%, bezogen auf vorgelegtes Wasserstoffsiloxan und Polyether, eingesetzt.

Das molare Verhältnis von α,ω-Wasserstoffsiloxanen zu Polyetherdiolen liegt im Bereich von 1,00 bis 2,00, vorzugsweise 1,25 bis 1,65, insbesondere 1,35 bis 1,55.

Die Menge des mitverwendeten Wassers entspricht bevorzugt dem halben Äquivalent des für die Bildung des erfindungsgemäß beanspruchten Copolymers eingesetzten Überschusses an α,ω-Dihydrogenpolydimethylsiloxans. Davon abweichende Mengen können verwendet werden, bieten aber in Bezug auf die angestrebten Endprodukte keinen Vorteil, da entweder freie Si-H Gruppen oder freies Waser in der Reaktionsmischung verbleiben.

Das erfindungsgemäße Verfahren wird im Allgemeinen durch Umsetzung von -Si(H)-Einheiten enthaltenden Polyorganosiloxanen der allgemeinen Formel (II) 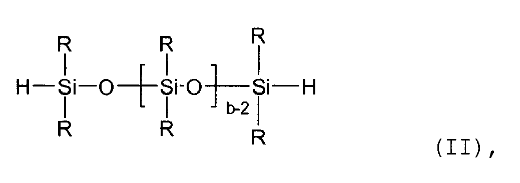 worin bedeuten:
- R: unabhängig voneinander monovalente C₁- bis C₁₈-Kohlenwasserstoffreste, vorzugsweise C₁- bis C₄-Kohlenwasserstoffreste, insbesondere Methylreste,
- b: 8 bis 80, vorzugsweise 10 bis 50, besonders bevorzugt 10 bis 25,
mit wenigstens einem Alkohol, der ausgewählt ist aus der Gruppe der Poloyetherdiole mit der allgemeinen Formel (III)

HO-(CₙH₍₂ₙ₋ₘ₎R¹ₘO-)ₓ-H (III)

enthalten, worin
- R¹: unabhängig voneinander C₁- bis C₄-Alkylreste, vorzugsweise Methyl- und Ethylreste,
- n: 2 bis 4,
- m: 0 oder 1,
- x: einen Wert von 1 bis 200, vorzugsweise 10 bis 100, insbesondere 35 bis 60, hat,
wobei die Oxyalkylensegmente -(CₙH₍₂ₙ₋ₘ₎R¹ₘO-) innerhalb eines Oxyalkylenetherrestes untereinander verschieden sein können, sowie die Reihenfolge der einzelnen Segmente (CₙH₍₂ₙ₋ₘ₎R¹ₘO-) beliebig sein kann und insbesondere Blockcopolymere, statistische Polymere sowie deren Kombinationen umfasst.

Erfindungsgemäß bevorzugt sind Polyetherdiole in denen Ethylenoxid (EO) und Propylenoxyd (PO) als Copolymerisate vorliegen.Besonders bevorzugt sind EO/PO- Copolymerisate, die blockartigen Aufbau besitzen und einen EO- Anteil von ca. 30 bis 70 Gew.-%, bezogen auf den Gesamtgehalt an Oxyalkyleneinheiten,enthalten.

Die analytischen Werte der gemäß dem erfindungsgemäßen Verfahren hergestellten Verbindungen stehen nicht im Widerspruch zu der Annahme, dass sich, abweichend von dem offenbarten Stand der Technik, ein Zugang zu hochmolekularen linearen SiOC-verknüpften Polydimethylsiloxan-Polyoxyalkylen-Blockcopolymeren mit sich wiederholenden (AB)-Einheiten erschließt, die Siloxan-lastige Domänen (X,Y) in ihren Termini besitzen.

Für den Fachmann unvorhersehbar werden auf diese Weise X-(AB)_{d} -Y Strukturen erhalten, die Siloxan-lastige Domänen (X,Y) in ihren Termini besitzen.

Ein weiterer Gegenstand der Erfindung sind daher SiOC-verknüpfte, lineare (AB)_{d}- Polydimethylsiloxan-Polyoxyalkylen-Blockcopolymeren der allgemeinen Formel (I)

H(R₂SiO)ₐ[(R₂SiO)_{b}(CₙH(₂ₙ₋ₘ)R¹ₘO)_{c}]_{d}(R₂SiO)ₑH (I)

worin die Substituenten und Indices die folgende Bedeutung haben
- R: unabhängig voneinander monovalente C₁- bis C₁₈-, vorzugsweise C₁- bis C₄-Kohlenwasserstoffreste, insbesondere Methylreste,
- R¹: unabhängig voneinander Methyl- und Ethylreste,
- a,e: unabhängig voneinander im statistischen Mittel ≥ 1, vorzugsweise ≥ 5, insbesondere ≥ 7, mit der Maßgabe, dass die Summe (a+b)> 1 ist,
- b: 8 bis 80, vorzugsweise 10 bis 50, besonders bevorzugt 10 bis 25,
- c: ≥ 10, vorzugsweise ≥ 20, insbesondere ≥ 40,
- d: ≥ 3 und ≤ 10, vorzugsweise ≥ 5 und ≤ 8,
- m: 0 oder 1,
- n: eine Zahl von 2 bis 4, vorzugsweise 2 oder 3 ist.

Das mittlere Molekulargewicht der Siloxanblöcke X (-R2SiO-)a und Y (-R2SiO-)e mit R = -CH3 liegt zwischen 74 bis 518 g/mol, besonders zwischen 148 und 3000 g/mol, vorzugsweise zwischen 300 und 2000 g/mol und insbesondere zwischen 500 und 1200 g/mol.

Eine besonders empfindliche und aussagekräftige Bewertung der Präzenz von Dimethylsiloxanblöcken in den Termini der erfindungsgemäßen Verbindungen ermöglicht der anwendungstechnische Test, bei dem das gewonnene Copolymer als Schaumstabilisator in Polyurethanformulierungen zur Herstellung von insbesondere Etherschäumen oder offenzelligen Hartschäumen eingebracht wird. Ein defizitärer Gehalt an terminalen Siloxanyldomänen (X, Y) im Schaumstabilisator gibt sich bei der Verschäumung in technisch unzureichendem Verhalten, als beispielsweise Schrumpf bzw. Kollaps, zu erkennen.

### Herstellungsbeispiele:

Die Herstellung der nach dem erfindungsgemäßen Verfahren beanspruchten SiOC-verknüpften, linearen Polydimethylsiloxan-Polyoxyalkylen-Blockcopolymeren kann wahlweise mit oder ohne den Einsatz eines geeigneten Lösungsmittels erfolgen. Werden hochmolekulare und damit einhergehend hochviskose SiOC-verknüpfte Copolymere angestrebt, so kann deren Herstellung im Sinne ihrer guten Handhabbarkeit während und nach der Synthese zweckmäßigerweise durch die Umsetzung des jeweiligen Polyetherdiols mit dem jeweiligen α,ω-Wasserstoffsiloxan in einem geeigneten Lösungsmittel stattfinden. Geeignete Solventien sind Alkane, Cycloalkane, Alkylaromaten u.ä., wobei insbesondere hochsiedende Lösungsmittel mit Siedepunkten > 120°C bevorzugt sind.

Die Reaktionspartner bestehend aus mindestens einem Polyetherdiol und einem oder mehreren α,ω-Wasserstoffsiloxan eventuell unter Einbeziehung eines Lösungsmittels können prinzipiell unter inniger Durchmischung bei erhöhter Temperatur gemeinsam vorgelegt und durch Zugabe einer ausreichenden Menge eines erfindungsgemäßen Katalysators zur Umsetzung gebracht werden oder aber auch sequentiell der Reaktion zugeführt werden. Hierbei ist insbesondere eine Fahrweise bevorzugt, bei der das Polyetherdiol oder die Polyetherdiolmischung in einem hochsiedenden Solvens bei erhöhter Temperatur zunächst mit einer kleinen Menge des erfindungsgemäßen mitverwendeten Katalysators und dann unter guter Durchmischung dosierkontrolliert mit dem α,ω-Wasserstoffsiloxan oder einer Mischung aus einem oder mehreren α,ω-Wasserstoffsiloxanen beaufschlagt wird. Die unter Gasfreisetzung erfolgende Herstellung der erfindungsgemäß beanspruchten Copolymeren läßt sich auf diese Weise vorzüglich kontrollieren und steuern. Die einzelnen Komponenten können zur Steuerung der Struktur des Endproduktes auch sequentiell zugesetzt werden.

Das molare Verhältnis von α,ω-Wasserstoffsiloxanen zu Polyetherdiolen liegt im Bereich von 1,00 bis 3,00, vorzugsweise 1,0 bis 2,5, insbesondere 1,25 bis 1,70.

Die Katalysatoren werden üblicherweise in Mengen von ca. 0,01 bis ca. 3,0, vorzugsweise 0,10 bis 2,30 Gew.-%, bezogen auf vorgelegtes Wasserstoffsiloxan und Polyether, eingesetzt.

Die Reaktionstemperatur zur Herstellung der erfindungsgemäßen Copolymeren sollte bei 110°C bis 160°C, bevorzugt bei 120°C bis 145°C liegen.

Der vorzeitige Eintrag von Wasser in die Reaktionsmischung, beispielsweise durch wasserhaltige Eddukte oder Luftfeuchtigkeit, ist bei dem erfindungsgemäßen Verfahren weitgehend zu vermeiden. Es wurde gefunden, dass zwar eine Reaktion stattfindet, die Reaktinsprodukte aber in Bezug auf ihre angestrebten positiven Eigenschaften als Additive bei der Herstellung von Polyurethanschäumen, mit steigendem Wasseranteil negativ beinflusst werden.

### Herstellungsbeispiel 1 (Vergleichsbeispiel)

In einem 500-ml-Vierhalskolben ausgerüstet mit KPG-Rührer, Innenthermometer, Rückflusskühler mit Gasableitungsschlauch werden 55,0 g eines Polyoxyalkylendiols mit einem mittleren Molgewicht von 2.800 g/mol und einem Ethylenoxid/Propylenoxid-Verhältnis von ca. 1:1 zusammen mit 77,5 g eines linearen Alkylbenzols mit einem Siedebereich von ca. 280 bis 320 °C , sowie 22,5 g eines α,ω-Wasserstoffsiloxans (mittlere Kettenlänge N=15) im stöchiometrischen Verhältnis (OH-Grp. : ≡SiH-Gr. = 1:1) bezogen auf den eingesetzten Polyether vorgelegt. Nun werden 0,1 g 1,8-Diazabicyclo[5,4,0]-undec-7-en hinzu gegeben. Nach 4 h bei 135°C ist der gasvolumetrisch bestimmte SiH-Umsatz quantitativ.

### Beispiel 2 (Erfindung)

In einem 500-ml-Vierhalskolben ausgerüstet mit KPG-Rührer, Innenthermometer, Rückflusskühler mit Gasableitungsschlauch werden 55,0 g eines Polyoxyalkylendiols mit einem mittleren Molgewicht von 2.800 g/mol und einem Ethylenoxid/Propylenoxid-Verhältnis von ca. 1:1 zusammen mit 91,0 g eines linearen Alkylbenzols mit einem Siedebereich von ca. 280 bis 320 °C , sowie 36,0 g eines α,ω-Wasserstoffsiloxans (mittlere Kettenlänge N=15) im 60%igen Überschuss bezogen auf den eingesetzten Polyether vorgelegt. Nun werden 0,1 g 1,8-Diazabicyclo[5,4,0]-undec-7-en hinzu gegeben. Nach 8,5 h bei 135°C liegt der gasvolumetrisch bestimmte SiH-Umsatz bei 63%. Durch die Zugabe von 0,06% H₂O bezogen auf den Gesamtansatz wird der Umsatz vervollständigt.

### Beispiel 3 (Erfindung)

In einem 500-ml-Vierhalskolben ausgerüstet mit KPG-Rührer, Innenthermometer, Rückflusskühler mit Gasableitungsschlauch werden 55,0 g eines Polyoxyalkylendiols mit einem mittleren Molgewicht von 2.800 g/mol und einem Ethylenoxid/Propylenoxid-Verhältnis von ca. 1:1 zusammen mit 88,2 g eines linearen Alkylbenzols mit einem Siedebereich von ca. 280 bis 320 °C sowie 33,2 g eines α,ω-Wasserstoffsiloxans (mittlere Kettenlänge N=15) im 50%igen Überschuss bezogen auf den eingesetzten Polyether vorgelegt. Nun werden 0,67 g 1,8-Diazabicyclo[5,4,0]-undec-7-en hinzu gegeben. Nach 3 h bei 135°C liegt der gasvolumetrisch bestimmte SiH-Umsatz bei 84%. Durch die Zugabe von 0,34 g Pyrimidin und 0,03% H₂O, bezogen auf den Gesamtansatz, wird der Umsatz innerhalb von 90 min vervollständigt.

Ausprüfung des nach erfindungsgemäßen Verfahren gewonnenen Polydimethylsiloxan-Polyoxyalkylen-Blockcopolymeren als Schaumstabilisator:

Der anwendungstechnische Test bedient sich der typischen Formulierung eines Etherschaums, die sich wie folgt zusammensetzt:

| Gew.-Teile | Rezepturbestandteile |
|---|---|
| 0,07 | Kosmos^{®} 29 (2inn (II)-2-ethylhexanoat) der Firma Goldschmidt GmbH |
| 30 | Polyol CP 3322 (marktübliches Polyol der Firma DOW) |
| 70 | Polyol CP 755 (marktübliches Polyol der Firma DOW) |
| 7 | Polyol CP 1421 (marktübliches Polyol der Firma DOW) |
| 1,95 | Wasser |
| 0,2 | Tegoamin^{®} BDE (Bis(dimethylamino-ethyl)etherlösung) der Firma Goldschmidt GmbH |
| 0,3 | Tegoamin^{®} 33(Triethylendiaminlösung) |
| 0,2 | Tegoamin^{®} DMEA (Dimethylethanolamin-lösung) |
| 1,2 | des zu testenden Schaumstabilisators |
| 40,3 | Toluylendiisocyanat (TDI 80) (entsprechend einem Index von 85). |

Durchführung der Ausprüfung der zu testenden Schaumstabilisatoren:

In einem Pappbecher werden der Zinnkatalysator Zinn(II)-2-ethylhexanoat, die drei Polyole, das Wasser und die drei Aminkatalysatoren vorgelegt und für 60 s mit einem Scheibenrührer bei 1.000 U/min vermischt. Anschließend wird das Isocyanat zugegeben und mit dem gleichen Rührer für 7 s bei 1.500 U/min eingearbeitet. Dabei beginnt die Mischung im Becher aufzuschäumen. Deshalb wird sie direkt nach dem Ende des Rührens in eine Verschäumungsbox gegossen. Diese hat eine Grundfläche von 17 x 17 cm und eine Höhe von 30 cm. Nach außen verhindert eine 5 cm dicke Isolierung aus PU-Schaum ein zu schnelles Abkühlen. Innen ist die Box mit einer Kunststofffolie ausgelegt, um den ausgehärteten Schaum anschließend entnehmen zu können. Der Schaum steigt nach dem Eingießen in der Verschäumungsbox auf. Im Idealfall bläst der Schaum bei Erreichen der maximalen Steighöhe ab und sackt dann leicht zurück. Dabei öffnet sich die Zellmembrane der Schaumbläschen und eine offenporige Zellstruktur des Schaumstoffs wird erhalten. Bei einer zu geringen Stabilisierungswirkung kollabiert der PU-Schaum vor Erreichen der maximalen Steighöhe. Im Falle einer zu starken Stabilisierung steigt der Schaum sehr lange und bläst nicht ab. Bedingt durch die dann sehr geschlossene Zellstruktur schrumpft der Schaum beim anschließenden Abkühlen durch die Volumenkontraktion des sich abkühlenden Gases.

Ergebnisse der Verschäumungen der Reaktionsprodukte der vorab genannten Ausführungsbeispiele:

### Beobachtung bei Beispiel 2 (Erfindung) :

Der Schaum steigt auf, bläst nach ca. 2 min ab und verändert sich beim nachfolgenden Abkühlen nicht. Bei der nachfolgenden Untersuchung werden eine Zellzahl von 10 Zellen/cm und eine Porosität von 70 mm gemessen (Staudruckmessung, ermittelt wird die Höhe einer Wassersäule, die einen äquivalenten Druck erzeugt). Dies veranschaulicht eine ausreichend feine und offene Zellstruktur (von geschlossenen Schäumen spricht man ab etwa 300 mm Wassersäule). Der Schaum weist die gewünschten Etherschaum-Eigenschaften auf. Der Schaumstabilisator des Beispiels 2 ist für die Herstellung dieses Schaumtyps geeignet.

### Beobachtung bei Beispiel 3 (Erfindung) :

Der Schaum steigt auf, bläst nach ca. 2 min ab und verändert sich beim nachfolgenden Abkühlen nicht. Bei der nachfolgenden Untersuchung werden eine Zellzahl von 10 Zellen/cm und eine Porosität von 70 mm gemessen. Dies veranschaulicht eine ausreichend feine und offene Zellstruktur. Der Schaum weist die gewünschten Etherschaum-Eigenschaften auf. Der Schaumstabilisator des Beispiels 3 ist für die Herstellung dieses Schaumtyps geeignet.

### Beobachtung bei Beispiel 1 (nicht erfindungsgemäß):

Der Schaum steigt auf und bläst nicht ab. Stattdessen steigt der Schaum lange nach (> 3 min). Beim nachfolgenden Abkühlen schrumpft der Schaum stark. Eine Messung der physikalischen Eigenschaften kann aufgrund des Schrumpfs nicht erfolgen.

## Patentansprüche

1. Verfahren zur Herstellung von SiOC-verknüpften, linearen Polydimethylsiloxan-Polyoxyalkylen-Blockcopolymeren mit sich wiederholenden (AB)-Einheiten durch Umsetzung von ein oder mehreren Polyetherdiolen mit einem stöchiometrischen Überschuss α,ω-Dihydrogen-polydimethylsiloxanen und mindestens einem tertiären Amin als Katalysator, **dadurch gekennzeichnet, dass** die Reaktion nach vollständig erfolgter Umsetzung der Alkoholkomponente in Gegenwart geringer Mengen Wasser so lange weitergeführt wird, bis keine =Si(H)-Gruppen gasvolumetrisch mehr nachweisbar sind.

2. Verfahren zur Herstellung von SiOC-verknüpften, linearen Polydimethylsiloxan-Polyoxyalkylen-Blockcopolymeren mit sich wiederholenden (AB)-Einheiten gemäß Anspruch 1, durch Umsetzung von =Si(H)-Einheiten enthaltenden Polyorganosiloxanen der allgemeinen Formel (II) 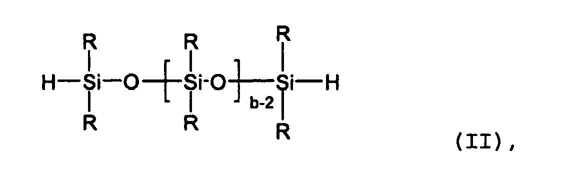 worin bedeuten:
R unabhängig voneinander monovalente C₁- bis C₁₈-Kohlenwasserstoffreste,
b 8 bis 80,
mit wenigstens einem Alkohol, der ausgewählt ist aus der Gruppe der Poloyetherdiole mit der allgemeinen Formel (III)
HO-(CₙH(₂ₙ₋ₘ)R¹ₘO-)ₓ-H (III)
worin
R¹ unabhängig voneinander C₁- bis C₄-Alkylreste,
n 2 bis 4,
m 0 oder 1,
x einen Wert von 1 bis 200 hat,
wobei
die Oxyalkylensegmente - (CₙH(₂ₙ₋ₘ)R¹ₘO-) innerhalb eines Oxyalkylenetherrestes untereinander verschieden sein können, sowie die Reihenfolge der einzelnen Segmente (-CₙH(₂ₙ₋ₘ)R¹ₘO-)beliebig sein kann und insbesondere Blockcopolymere, statistische Polymere sowie deren Kombinationen umfasst.

3. Verfahren zur Herstellung von SiOC-verknüpften, linearen [AB]_{d}-Polydimethylsiloxan-Polyoxyalkylen-Blockcopolymeren gemäß Anspruch 1, **dadurch gekennzeichnet, dass** als Katalysator mindestens ein tertiäres Amin ausgesucht aus der Reihe der aromatischen verwendet wird.

4. Verfahren zur Herstellung von SiOC-verknüpften, linearen (AB)_{d}-Polydimethylsiloxan-Polyoxyalkylen-Blockcopolymeren gemäß Anspruch 1, **dadurch gekennzeichnet, dass** als Katalysator mindestens ein tertiäres Amin ausgesucht aus der Reihe der cycloaliphatischen Aminbasen (Chinuclidin, Diazabicyclo[2,2,2]octan, etc.) und hierbei insbesondere 1,8-Diazabicyclo[5,4,0]-undec-7-en verwendet wird.

5. Verfahren gemäß Patentanspruch 1, **dadurch gekennzeichnet, dass** als Katalysator mindestens ein tertiäres Amin ausgesucht aus der Gruppe: Pyridine, Pyrimidine, Pyridazin, Pyrazin, Chinolin, Imidazol, Chinuclidin, Diazabicyclo[2,2,2]octan und 1,8-Diazabicyclo[5,4,0]-undec-7-en verwendet wird.

6. Verfahren zur Herstellung von SiOC-verknüpften, linearen Polydimethylsiloxan-Polyoxyalkylen-Blockcopolymeren gemäß mindestens einem der Ansprüche 1 bis 5, **dadurch gekennzeichnet, dass** das mittlere Molekulargewicht jedes Siloxanblocks (A) (-R₂SiO-)_{b}, mit R = CH₃- zwischen 650 bis 6000 g/mol liegt.

7. Verfahren zur Herstellung von SiOC-verknüpften, linearen Polydimethylsiloxan-Polyoxyalkylen-Blockcopolymeren gemäß mindestens einem der Ansprüche 1 bis 5, **dadurch gekennzeichnet, dass** der Polyoxyalkylenblock (B) (-CnH₍₂ₙ₋₁₎R¹ₘO)_{c} gemischte Oxyethylen- und Oxypropyleneinheiten mit einem Oxyethylenanteil von etwa 30 bis 70 Ges.-% und 70 bis 30 Gew.-% Oxypropylenanteil, bezogen auf den Gesamtgehalt an Oxyalkyleneinheiten im Block enthält.

8. Verfahren zur Herstellung von SiOC-verknüpften, linearen Polydimethylsiloxan-Polyoxyalkylen-Blockcopolymeren gemäß mindestens einem der Ansprüche 1 bis 5, **dadurch gekennzeichnet, dass** das mittlere Molekulargewicht jedes Polyoxyalkylenblocks (B) (CₙH(₂ₙ₋₁)R¹ₘO)_{c} zwischen etwa 600 und 10.000 g/mol liegt.

9. Verfahren zur Herstellung von SiOC-verknüpften, linearen Polydimethylsiloxan-Polyoxyalkylen-Blockcopolymeren gemäß mindestens einem der Ansprüche 1 bis 5, **dadurch gekennzeichnet, dass** der Anteil der Siloxanblöcke im Gesamt-Copolymer zwischen 20 und 50 Gew.-% beträgt.

10. Verfahren zur Herstellung von SiOC-verknüpften, linearen Polydimethylsiloxan-Polyoxyalkylen-Blockcopolymeren gemäß mindestens einem der Ansprüche 1 bis 5, **dadurch gekennzeichnet, dass** das Blockcopolymer ein mittleres Molekulargewicht von 10.000 g/mol bis ca. 1600.000 g/mol aufweist

11. SiOC-verknüpfte, lineare Polydimethylsiloxan-Polyoxyalkylen-Blockcopolymere hergestellt nach einem Verfahren gemäß Anspruch 1.

12. Verwendung der SiOC-verknüpften, linearen Polydimethylsiloxan-Polyoxyalkylen-Blockcopolymeren hergestellt nach einem Verfahren gemäß Anspruch 1 als grenzflächenaktive Additive zur Herstellung von Polyurethanschäumen.

## Claims

1. Process for the preparation of SiOC-linked, linear polydimethylsiloxane-polyoxyalkylene block copolymers having (AB) repeat units, via reaction of one or more polyetherdiols with a stoichiometric excess of α,ω-dihydropolydimethylsiloxanes and at least one tertiary amine as catalyst, **characterized in that**, after completed reaction of the alcohol component, the reaction is continued in the presence of small amounts of water until no remaining =Si (H) groups are detectable by a gas-volumetric method.

2. Process for the preparation of SiOC-linked, linear polydimethylsiloxane-polyoxyalkylene block copolymers having (AB) repeat units according to Claim 1, via reaction of polyorganosiloxanes which contain =Si(H) units and which have the general formula (II) 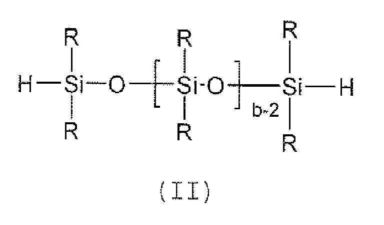 where:
R, independently of one another, are monovalent C₁-C₁₈ hydrocarbon radicals, and
b is from 8 to 80,
with at least one alcohol selected from the group of the polyetherdiols with the general formula (III)
HO- (CₙH₍₂ₙ₋ₘ₎R¹ₘO-)ₓ-H (III)
where
R¹, independently of one another, are C₁-C₄-alkyl radicals,
n is from 2 to 4,
m is 0 or 1, and
x has a value from 1 to 200,
where
the oxyalkylene segments - (CₙH(₂ₙ₋ₘ)R¹ₘO-) can differ from one another within an oxyalkylene ether radical, and the sequence of the individual - (CₙH(₂ₙ₋ₘ)R¹ₘO-) segments can also be as desired, and this in particular encompasses block copolymers, random polymers, and also combinations of these.

3. Process for the preparation of SiOC-linked, linear [AB]_{d} polydimethylsiloxane-polyoxyalkylene block copolymers according to Claim 1, **characterized in that** at least one tertiary amine selected from the group of the aromatic amines is used as catalyst.

4. Process for the preparation of SiOC-linked, linear polydimethylsiloxane-polyoxyalkylene block copolymers according to Claim 1, **characterized in that** the catalyst used comprises at least one tertiary amine selected from the group of the cycloaliphatic amine bases (quinuclidine, diazabicyclo[2.2.2]octane, etc.), and here in particular 1,8-diazabicyclo[5.4.0]undec-7-ene.

5. Process according to Claim 1, **characterized in that** the catalyst used comprises at least one tertiary amine selected from the group of: pyridines, pyrimidines, pyridazine, pyrazine, quinoline, imidazole, quinuclidine, diazabicyclo-[2.2.2] octane, and 1,8-diazabicyclo [5.4.0] undec-7-ene.

6. Process for the preparation of SiOC-linked, linear polydimethylsiloxane-polyoxyalkylene block copolymers according to at least one of Claims 1 to 5, **characterized in that** the average molar mass of each siloxane block (A) (-R₂SiO-)_{b}, where R = CH₃-, is from 650 to 6000 g/mol.

7. Process for the preparation of SiOC-linked, linear polydimethylsiloxane-polyoxyalkylene block copolymers according to at least one of Claims 1 to 5, **characterized in that** the polyoxyalkylene block (B) contains mixed oxyethylene units and oxypropylene units (-CₙH(₂ₙ₋₁)R¹ₘO-) with an oxyethylene content of about 30 to 70% by weight and oxypropylene content of 70 to 30% by weight, based on the total content of oxyalkylene units in the block.

8. Process for the preparation of SiOC-linked, linear polydimethylsiloxane-polyoxyalkylene block copolymers according to at least one of Claims 1 to 5, **characterized in that** the average molar mass of each polyoxyalkylene block (B) (CₙH₍₂ₙ₋₁₎R¹ₘO)_{c} is from about 600 to 10 000 g/mol.

9. Process for the preparation of SiOC-linked, linear polydimethylsiloxane-polyoxyalkylene block copolymers according to at least one of Claims 1 to 5, **characterized in that** the content of the siloxane blocks in the entire copolymer is from 20 to 50% by weight.

10. Process for the preparation of SiOC-linked, linear polydimethylsiloxane-polyoxyalkylene block copolymers according to at least one of Claims 1 to 5, **characterized in that** the average molar mass of the block copolymer is from 10 000 g/mol to about 1 600 000 g/mol.

11. SiOC-linked, linear polydimethylsiloxane-polyoxyalkylene block copolymers prepared by a process according to Claim 1.

12. Use of the SiOC-linked, linear polydimethylsiloxane-polyoxyalkylene block copolymers prepared by a process according to Claim 1 as surfactant additives for production of polyurethane ether foams.

## Revendications

1. Procédé pour la préparation de copolymères séquencés polydiméthylsiloxane-polyoxyalkylène linéaires, assemblés par liaison SiOC, comportant des motifs (AB) répétitifs, par mise en réaction d'un ou plusieurs polyétherdiols avec un excès stoechiométrique d'α,ω-dihydrogéno-polydiméthylsiloxanes et au moins une amine tertiaire en tant que catalyseur, **caractérisé en ce qu'**après conversion effectuée totalement du composant alcool on poursuit la réaction en présence de faibles quantités d'eau jusqu'à ce qu'aucun groupe =Si(H) ne soit plus détectable par volumétrie gazeuse.

2. Procédé pour la préparation de copolymères séquencés polydiméthylsiloxane-polyoxyalkylène linéaires, assemblés par liaison SiOC, comportant des motifs (AB) répétitifs, selon la revendication 1, par mise en réaction de polyorganosiloxanes comportant des motifs =Si(H), de formule générale (II) 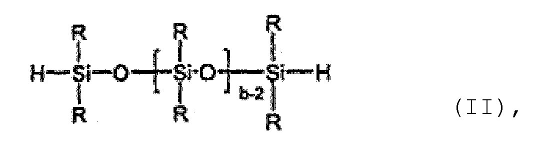 dans laquelle :
R représente, chaque fois indépendamment, des radicaux hydrocarbonés en C₁-C₁₈ monovalents,
b vaut de 8 à 80,
avec au moins un alcool qui est choisi dans le groupe des polyétherdiols ayant la formule générale (III)
HO-(CₙH(₂ₙ₋ₘ)R¹ₘO-)ₓ-H (III)
dans laquelle
R¹ représente, chaque fois indépendamment, des radicaux alkyle en C₁-C₄,
n vaut de 2 à 4,
m vaut 0 ou 1,
x a une valeur de 1 à 200,
les segments oxyalkylène -(CₙH₍₂ₙ₋ₘ₎R¹ₘO-) à l'intérieur d'un radical éther oxyalkylène pouvant être différents les uns des autres, et l'ordre des segments (-CₙH(₂ₙ-ₘ)R¹ₘO-) individuels pouvant être quelconque et comprenant en particulier des copolymères séquencés, des polymères statistiques ainsi que des associations de ceux-ci.

3. Procédé pour la préparation de copolymères séquencés polydiméthylsiloxane-polyoxyalkylène (AB)_{d} linéaires, assemblés par liaison SiOC, selon la revendication 1, **caractérisé en ce qu'**on utilise comme catalyseur au moins une amine tertiaire choisie dans la série des aromatiques.

4. Procédé pour la préparation de copolymères séquencés polydiméthylsiloxane-polyoxyalkylène (AB)_{d} linéaires, assemblés par liaison SiOC, selon la revendication 1, **caractérisé en ce qu'**on utilise comme catalyseur au moins une amine tertiaire choisie dans la série des bases de type amine cycloaliphatique (quinuclidine, diazabicyclo[2.2.2]octane, etc.) et parmi celles-ci en particulier le 1,8-diazabicyclo[5.4.0]-undéc-7-ène.

5. Procédé selon la revendication 1, **caractérisé en ce qu'**on utilise comme catalyseur au moins une amine tertiaire choisie dans le groupe : pyridines, pyrimidines, pyridazine, pyrazine, quinoléine, imidazole, quinuclidine, diazabicyclo[2.2.2]octane et 1,8-diazabicyclo[5.4.0]-undéc-7-ène.

6. Procédé pour la préparation de copolymères séquencés polydiméthylsiloxane-polyoxyalkylène linéaires, assemblés par liaison SiOC, selon au moins l'une quelconque des revendications 1 à 5, **caractérisé en ce que** la masse moléculaire moyenne de chaque séquence siloxane (A) (-R₂SiO-)_{b}, où R = CH₃-, est comprise entre 650 et 6 000 g/mole.

7. Procédé pour la préparation de copolymères séquencés polydiméthylsiloxane-polyoxyalkylène linéaires, assemblés par liaison SiOC, selon au moins l'une quelconque des revendications 1 à 5, **caractérisé en ce que** la séquence polyoxyalkylène (B) (-CₙH₍₂ₙ₋₁₎R¹ₘO)_{c} contient des motifs oxyéthylène et oxypropylène mélangés en une proportion d'oxyéthylène d'environ 30 à 70 % en poids et une proportion d'oxypropylène de 70 à 30 % en poids, par rapport à la teneur totale en motifs oxyalkylène de la séquence.

8. Procédé pour la préparation de copolymères séquencés polydiméthylsiloxane-polyoxyalkylène linéaires, assemblés par liaison SiOC, selon au moins l'une quelconque des revendications 1 à 5, **caractérisé en ce que** la masse moléculaire de chaque séquence polyoxyalkylène (B) (CₙH₍₂ₙ₋₁₎R¹ₘO)_{c} est comprise entre 600 et 10 000 g/mole.

9. Procédé pour la préparation de copolymères séquencés polydiméthylsiloxane-polyoxyalkylène linéaires, assemblés par liaison SiOC, selon au moins l'une quelconque des revendications 1 à 5, **caractérisé en ce que** la proportion des séquences siloxane dans le copolymère total est comprise entre 20 et 50 % en poids.

10. Procédé pour la préparation de copolymères séquencés polydiméthylsiloxane-polyoxyalkylène linéaires, assemblés par liaison SiOC, selon au moins l'une quelconque des revendications 1 à 5, **caractérisé en ce que** le copolymère séquencé présente une masse moléculaire moyenne de 10 000 g/mole à environ 1 600 000 g/mole.

11. Copolymères séquencés polydiméthylsiloxane-polyoxyalkylène linéaires, assemblés par liaison SiOC, préparés conformément à un procédé selon la revendication 1.

12. Utilisation des copolymères séquencés polydiméthylsiloxane-polyoxyalkylène linéaires, assemblés par liaison SiOC, préparés conformément à un procédé selon la revendication 1, en tant qu'additifs tensioactifs dans la production de mousses de polyuréthane.
